**Europäisches Patentamt**

**European Patent Office**

**Office européen des brevets**

(19)

(11) Veröffentlichungsnummer: **0 331 996 B1**

(12) **EUROPÄISCHE PATENTSCHRIFT**

(45) Veröffentlichungstag der Patentschrift: **29.09.93**

(51) Int. Cl.[5]: **C08G 18/00**, C08G 18/08, C09D 175/04, C09J 175/04

(21) Anmeldenummer: **89103342.5**

(22) Anmeldetag: **25.02.89**

(54) **Lagerstabile Reaktionsharzmischung, Herstellung und Verwendung.**

(30) Priorität: **09.03.88 DE 3807660**

(43) Veröffentlichungstag der Anmeldung:
**13.09.89 Patentblatt 89/37**

(45) Bekanntmachung des Hinweises auf die
Patenterteilung:
**29.09.93 Patentblatt 93/39**

(84) Benannte Vertragsstaaten:
**AT BE CH DE FR GB IT LI NL SE**

(56) Entgegenhaltungen:
**EP-A- 0 272 563**
**DE-A- 3 204 809**
**DE-A- 3 600 764**
**FR-A- 2 351 139**

(73) Patentinhaber: **BAYER AG**

**D-51368 Leverkusen(DE)**

(72) Erfinder: **Müller, Hanns Peter, Dr.**
**Weizenfeld 36**
**D-5060 Bergisch Gladbach 2(DE)**
Erfinder: **Heine, Heinrich**
**Müritzstrasse 38**
**D-5090 Leverkusen 1(DE)**

Rank Xerox (UK) Business Services
(3.10/3.6/3.3.1)

EP 0 331 996 B1

**Beschreibung**

Die vorliegende Erfindung bezieht sich auf lagerstabile Reaktionsharzmischungen, ihre Herstellung und Verwendung. Reaktionsgemische aus Polyepoxiden und Polyisocyanaten finden immer mehr Interesse als Ausgangskomponenten zur Herstellung von hochwertigen Polyadditionskunststoffen. So können aus 1,2-Epoxiden und Polyisocyanaten unter Verwendung von Härtungskatalysatoren Kunststoffe mit Isocyanurat- und Oxazolidinonstrukturen aufgebaut werden (DE-AS 1 115 922, Prior, 1959), US-A-4 582 723 beschreibt heißhärtende Reaktionsharzmischungen für Imprägnierungen und Einbettungen. Die Harze dienen als Elektroisolierstoffe für vielfältige Einsatzzwecke. Solche Harze können ebenfalls zur Herstellung von steifen Bauteilen mit hoher Wärmeformbeständigkeit herangezogen werden. Aus DE-A-36 00 764 sind bereits wärmehärtbare Reaktionsharzgemische bekannt, welche ein organisches Polyisocyanat, wenigstens eine zwei Epoxidgruppen aufweisende organische Verbindung eine durch Wärme aktivierbaren Katalysator und gegebenenfalls weitere Hilfs- und Zusatzmittel enthalten.

Die Verwendung von Reaktionsharzgemischen aus Polyisocyanaten und Polyepoxiden zum Aufbau von Schaumkunststoffen ist ebenfalls beschrieben worden [K. ASHIDA and K.C. FRISCH, J. of cell. Plastics May/June, 1972, S. 160 ff.).

Eine breite technische Anwendung haben die Reaktionsharzgemische aber bisher nicht gefunden, da die Mischungen aus Polyepoxiden und Polyisocyanaten nicht lagerstabil sind. Es wäre daher wünschenswert, lagerstabile Mischungen von Polyepoxiden und Polyisocyanaten dem Anwender zur Verfügung zu stellen, die auch bei längerer Lagerung im geschlossenen Gefäß bei 40-50 °C ihre Viskosität nicht ändern. Ein langsamer Viskositätsaufbau von Reaktionsharzgemischen verhindert nämlich den Einsatz von Maschinen, die zur Dosierung von Reaktionsharzen heute in der industriellen Fertigung allgemein eingesetzt werden. Die Zubereitung von Frisch hergestellten Reaktionsharzgemischen bedeutet für den Anwender eine aufwendige Vorratshaltung und ein rasches Verarbeiten der frisch hergestellten Reaktionsharzmischungen.

Es war daher die Aufgabe der vorliegenden Erfindung, lagerstabile Mischungen aus Polyepoxiden und Polyisocyanaten zur Verfügung zu stellen, die eine breite Anwendung der Reaktionsharze als Elektroisolierstoffe, als Schaumstoffe mit hoher Wärmebeständigkeit, als Lackbindemittel, als Klebstoffrohstoffe und als Matrixmaterialien für Konstruktionswerkstoffe ermöglichen.

Gegenstand der Erfindung sind lagerstabile Reaktionsharzmischungen enthaltend wenigstens ein Polyisocyanat a) und wenigstens eine mindestens zwei Epoxidgruppen aufweisende organische Verbindung b), dadurch gekennzeichnet, daß die Mischung erhältlich ist aus

a) mindestens einem organischen Polyisocyanat

b) mindestens einer mindestens zwei Epoxidgruppen aufweisenden organischen Verbindung

c) wenigstens einem die Reaktion von a) und b) inhibierenden Alkylierungsmittel aus der Gruppe der Ester einer organischen Sulfonsäure, Methyliodid oder Dimethylsulfat und gegebenenfalls

d) weiteren Hilfs- und Zusatzstoffen.

Es ist als äußerst überraschend anzusehen, daß eine derartige Behandlung mit Alkylierungsmitteln c) die Stabilisierung der Reaktionsgemische bewirkt, wo doch bekannt ist, daß Epoxide selbst Alkylierungsmittel darstellen. Eine thermische Behandlung der Ausgangskomponentenmischung ohne den erfindungsgemäßen Zusatz von Alkylierungsmitteln bewirkt die gewünschte Stabilisierung nicht (vgl. Beispiel 2).

Die aus der Isocyanatchemie bekannten Reaktionsverzögerer oder Stopper wie Säuren und Säurehalogenide bewirken ebenfalls keine dauerhafte Stabilisierung der Harzmischung.

Gegenstand der vorliegenden Erfindung ist auch ein Verfahren zur Herstellung der erfindungsgemäßen Mischung, dadurch gekennzeichnet, daß die Bestandteile a) bis c) und gegebenenfalls d) gleichzeitig oder nacheinander zusammengegeben werden und zusammen oder wenigstens die Bestandteile b) und c) zusammen einer Temperaturbehandlung unterzogen werden.

Gegenstand der vorliegenden Erfindung ist auch die Verwendung der erfindungsgemäßen Mehrkomponenten-Reaktivharz-Mischungen gegebenenfalls nach Zusatz von an sich bekannten Katalysatoren, als Ausgangskomponenten zur Herstellung von Formkörpern, Elektroisolierstoffen, Beschichtungen, Verklebungen und Schaumstoffen.

Bevorzugte lagerstabile Reaktionsharzmischungen haben eine Viskosität von 20 bis 20 000 mPas bei 25 °C. In einer anderen bevorzugten Ausführungsform können aber auch bei Raumtemperatur feste Polyisocyanate verwendet werden die gegebenenfalls über Lösungsmittel mit den übrigen Bestandteilen vermischt werden und mit diesen nach Abzug des Lösungsmittels in fester Form vorliegen.

Bei der Ausgangskomponente a) handelt es sich um beliebige organische Polyisocyanate der aus der Polyurethanchemie an sich bekannten Art. Geeignet sind beispielsweise aliphatische, cycloaliphatische,araliphatische, aromatische und hetrocyclische Polyisocyanate, wie sie z.B. von W. Siefken in Justus Liebigs Annalen der Chemie, 562, Seiten 75 bis 136, beschrieben werden, beispielsweise solche der Formel

2

Q (NCO)ₙ,

in der

n = 2-4, vorzugsweise 2,
und
Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen,
bedeuten, z.B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3-und -1,4-diisocyanat sowie beliebige Gemische dieser Isomeren, 1-Isocyanato-3,3,5-trimethyl-5-isocyanato-methyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3-und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'-und/oder -4,4'-diisocyanat, Naphthylen-1,5-diisocyanat.

Ferner kommen beispielsweise erfindungsgemäß in Frage: Triphenylmethan-4,4' ,4"-triisocyanat, Polyphenyl-polymethylenpolyisocyanate, wie sie durch Anilin-Formaldehyd-Kondensation und anschließende Phosgenierung erhalten werden (GB 874 430 und GB 848 671), m- und p-Isocyanatophenylsulfonyl-isocyanate (US 3 454 606), perchlorierte Arylpolyisocyanate, (US 3 277 138), Carbodiimidgruppen aufweisende Polyisocyanate (US 3 152 162), Norbornan-Diisocyanate (US 3 492 330), Allophanatgruppen aufweisende Polyisocyanate, (GB 994 890), Isocyanuratgruppen aufweisende Polyisocyanate, (US 3 001 973), Urethangruppen aufweisende Polyisocyanate, (US 3 394 164 und 3 644 457), acylierte Harnstoffgruppen aufweisende Polyisocyanate (DE- PS 1 230 778), Biuretgruppen aufweisende Polyisocyanate, (US 3 124 605, 3 201 372 und 3 124 605), durch Telomerisationsreaktionen hergestellte Polyisocyanate (US 3 654 106), Estergruppen aufweisende Polyisocyanate, (US 3 567 763), Umsetzungsprodukte der obengenannten Isocyanate mit Acetalen (DE-PS 1 072 385) und polymere Fettsäureester enthaltende Polyisocyanate (US 3 455 883).

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), insbesondere Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-und/oder 2,4'-Diphenyl-methandiisocyanat ableiten.

Besonders bevorzugt ist die Verwendung eines Isomeren-und/oder Homologengemisches von Polyisocyanaten der Diphenylmethan-Reihe mit einem Gehalt an 2,4'-Diisocyanatodiphenylmethan von mehr als 20 Gew.-%.

Es handelt sich hierbei um Polyisocyanatgemische der Diphenylmethanreihe mit einem Gehalt an 2,4'-Diisocyanatodiphenylmethan von mehr als 20 Gew.-% vorzugsweise von 30 bis 70 Gew.-%. Neben diesen 2,4'-Isomeren enthält die besonders bevorzugte Polyisocyanat-Komponente im allgemeinen weitere isomere bzw. homologe Polyisocyanate der Diphenylmethanreihe. Dies bedeutet, daß es sich bei der besonders bevorzugten Polyisocyanat-Komponente im allgemeinen entweder um Gemische aus 2,4'-Diisocyanato-diphenylmethan mit 4,4'-Diisocyanatodiphenylmethan und gegebenenfalls 0 bis 20 Gew.-%, bezogen auf das Gesamtgemisch an 2,2'-Diisocyanat-diphenylmethan, oder aber um Gemische dieser Isomeren mit höherkernigen Polyphenyl-polymethylen-polyisocyanaten handelt. In den letztgenannten Gemischen liegt im allgemeinen ein Gehalt von 10 bis zu 60 Gew.-% bezogen auf Gesamtgemisch an derartigen höherkernigen Polyisocyanaten vor. Das erstgenannte als bevorzugt einzusetzende Polyisocyanat-Komponente geeignete an 2,4'-Isomeren angereicherte Diisocyanatgemisch kann beispielsweise durch Abdestillieren eines Diisocyanatgemischs der angegebenen Zusammensetzung aus einem Polyisocyanat-Gemisch erhalten werden, wie es durch Phosgenierung von Anilin/Formaldehyd-Kondensaten entsteht. Das ebenfalls besonders bevorzugt geeignete, höherkernige Polyisocyanate enthaltende Gemisch kann beispielsweise durch Rückvermischen des zuletzt genannten Destillationsproduktes mit an 4,4'-Diisocyanatodiphenylmethan verarmten Phosgenie-

3

EP 0 331 996 B1

rungsprodukt beispielsweise gemäß DE-AS 1 923 214 erhalten werden. Es ist auch möglich, ein derartiges Gemisch, d.h. ein Polyisocyanatgemisch, dessen Gehalt an 2,4′-Diisocyanatodiphenylmethan den gemachten Angaben entspricht, direkt durch entsprechende Steuerung der Anilin/Formaldehyd-Kondensation zu erhalten. Die US-PS 3 277 173 beschreibt beispielsweise einen Weg zu Polyamingemischen der Diphenylmethanreihe mit einem hohen Gehalt an 2,4′-Diaminodiphenylmethan. Durch Phosgenierung dieser an 2,4′-Diaminodiphenylmethan reichen Kondensate können dann direkt die besonders bevorzugt einsetzbaren Polyisocyanate erhalten werden. Auch in der DT-OS 1 937 685 sowie in der US-PS 3 362 979 werden Wege zu derartigen Polyisocyanatgemischen gewiesen. Auch in den besonders bevorzugt geeigneten Polyisocyanatgemischen, welche höherkernige Polyisocyanate der Diphenylmethanreihe enthalten, liegt der Gehalt an 2,4′-Diisocyanatodiphenylmethan oberhalb 20 Gew.-% bezogen auf Gesamtgemisch.

Bei der Komponente b) handelt es sich um beliebige, mindestens zwei Epoxidgruppen, d.h. vorzugsweise 1,2-Epoxidgruppen aufweisende aliphatische, cycloaliphatische, aromatische oder heterocyclische Verbindungen. Die bevorzugten als Komponente b) geeigneten Polyepoxide weisen pro Molekül 2 bis 4, vorzugsweise 2 Epoxidgruppen und ein Epoxidäquivalentgewicht von 90 bis 500, vorzugsweise 170 bis 220 auf.

Geeignete Polyepoxide sind beispielsweise Polyglycidylether mehrwertiger Phenole, beispielsweise von Brenzkatechin, Resorcin, Hydrochinon, 4,4′-Dihydroxydiphenylmethan, von 4,4′-Dihydroxy-3,3′-dimethyldiphenylmethan, von 4,4′-Dihydroxydiphenylmethan, 4,4′-Dihydroxydiphenylcyclohean, von 4,4′-Dihydroxy-3,3′-dimethyldiphenylpropan, von 4,4′-Dihydroxydiphenyl, aus 4,4′-Dihydroxydiphenylsulfon, von Tris-(4-hydroxyphenyl)-methan, den Chlorierungs- und Bromierungsprodukten der vorstehend genannten Diphenole, von Novolacken (d.h. aus Umsetzungsprodukten von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N′-Dimethyl-N,N′-diepoxypropyl-4,4′-diaminodiphenylmethan, N-Diepoxypropyl-4-amino-phenylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise von 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N′-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten. Außerdem seien Polymerisate von ungesättigten Monoepoxiden genannt, beispielsweise aus Methacrylsäureglycidylester oder Allylglycidylether.

Vorzugsweise werden erfindungsgemäß folgende Polyepoxidverbindungen oder deren Mischungen als Komponente b) verwendet:
Polyglycidylether mehrwertiger Phenole, insbesondere von Bisphenol A; Polyepoxidverbindungen auf der Basis von aromatischen Aminen, insbesondere Bis(N-epoxypropyl)-anilin, N,N′-Dimethyl-N,N′-diepoxypropyl-4,4′-diaminodiphenylmethan und N-Diepoxypropyl-4-amino-phenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan, 3,4-Epoxycyclohexylmethan-3,4-epoxycyclohexan-carboxylat.

4

Flüssige Polyepoxide oder niedrigviskose Diepoxide, wie Bis-(N-epoxipropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

Die Komponente b) wird in einer solchen Menge eingesetzt, die einem Äquivalentverhältnis von Isocyanatgruppen zu Epoxidgruppen von 1,2:1 bis 500:1, vorzugsweise 3:1 bis 65:1 und insbesondere 5:1 bis 30:1, entspricht.

Bei den Alkylierungsmitteln c) handelt es sich um beliebige, alkylierend wirkende Ester von organischen Sulfonsäuren. Vorzugsweise weisen diese Sulfonsäurealkylester ein Molekulargewicht von 110 bis 250 auf. Geeignet sind sowohl aliphatische Sulfonsäurealkylester wie n- Butansulfonsäuremethylester, n-Perfluorbutansulfonsäuremethylester oder n-Hexansulfonsäureethylester als auch aromatische Sulfonsäurealkylester wie Benzolsulfonsäuremethylester, -ethylester oder -n-butylester, p-Toluolsulfonsäuremethylester, -ethylester oder -n-butylester, 1-Naphthalinsulfonsäuremethylester, 3-Nitrobenzolsulfonsäure-methylester oder 2-Naphthalinsulfonsäuremethylester.Die genannten aromatischen Sulfonsäureester sind bevorzugt. Besonders bevorzugt wird p-Toluolsulfonsäuremethylester als Komponnte c) verwendet. Ebenfalls geeignet jedoch weniger bevorzugt sind Methyliodid und Dimethylsulfat als Komponente c). Vorzugsweise übertragen die Alkylierungsmittel c) Alkylgruppen mit 1 bis 4 C-Atomen.

Vorzugsweise wird die Komponente c) in Mengen von 0,001 bis 1 Gew.-%, insbesondere von 0,005 bis 0,3 Gew.-% jeweils bezogen auf die Summe aus Komponenten a) und b) eingesetzt. Die Komponente c) kann in reiner Form oder z.B. als Lösung in der Komponente a) dem Mehrkomponentensystem zudosiert werden.

Bei den gegebenenfalls mitzuverwendenden Hilfs- und Zusatzmitteln d) handelt es sich beispielsweise

d1) um polymerisierbare, olefinisch ungesättigte Monomere, die in Mengen von bis zu 100 Gew.-%, vorzugsweise bis zu 50 Gew.-%, bezogen auf das Gesamtgewicht der Komponenten a) und b) zum Einsatz gelangen können.

Typische Beispiele von Zusatzmitteln d1) sind olefinisch ungesättigte Monomere, die keine gegenüber NCO-Gruppen reaktive Wasserstoffatome aufweisen, wie z.B. Diisobutylen, Styrol, $C_1$-$C_4$-Alkylstyrole, wie $\alpha$-Methylstyrol, $\alpha$-Butylstyrol, Vinylchlorid, Vinylacetat, Maleinimidderivate wie z.B. Bis-(4-maleinimido-phenyl)-methan, Acrylsäure-$C_1$-$C_8$-alkylester wie Acrylsäuremethylester, Acrylsäurebutylester oder Acrylsäureoctylester, die entsprechenden Methacrylsäureester, Acrylnitril oder Diallylphthalat. Beliebige Gemische derartiger olefinisch ungesättigter Monomerer können ebenfalls eingesetzt werden. Vorzugsweise werden Styrol und/oder (Meth)-acrylsäure-$C_1$-$C_4$-alkylester verwendet.

Bei Mitverwendung von Zusatzmitteln d1) ist die Mitverwendung von klassischen Polymerisationsinitiatoren wie z.B. Benzoylperoxid möglich, im allgemeinen jedoch nicht erforderlich.

Weitere, gegebenenfalls mitzuverwendende Hilfs- und Zusatzmittel d) sind

d2) mindestens 2, insbesondere 2 bis 8 und vorzugsweise 2 bis 3 alkoholische Hydroxylgruppen aufweisende organische Verbindungen des Molekulargewichtsbereichs 62 bis 2000, wie sie als Aufbaukomponente für Polyurethane an sich bekannt sind. Beispiele sind einfache mehrwertige Alkohole wie Ethylenglykol, Hexandiol-1,6, Glycerin oder Trimethylolpropan, Dimethylsiloxan-Einheiten aufweisende Polyole, z.B. Bis- (dimethyl-hydroxymethyl-silyl)-ether; Estergruppen aufweisendde Polyhydroxylverbindungen wie z.B. Ricinusöl oder Polyhydroxypolyester wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind oder Polyhydroxypolyether wie sie durch Anlagerung von Alkylenoxiden wie Propylenoxid und/oder Ethylenoxid an geeignete Startermoleküle wie z.B. Wasser, die soeben genannten einfachen Alkohole oder auch Amine mit mindestens zwei aminischen NH-Bindungen zugänglich sind.

Die Zusatzmittel d2) werden, falls überhaupt, in einer solchen maximalen Menge mitverwendet, die einem NCO/OH-Äquivalentverhältnis, bezogen auf die Isocyanatgruppen der Komponente a) und die Hydroxylgruppen der Komponente d2), von mindestens 2:1, vorzugsweise mindestens 2,5:1, entspricht. In jedem Fall muß die Menge der Komponente a) so bemessen sein, daß das Äquivalentverhältnis von Isocyanatgruppen der Komponente a) zur Summe der Epoxidgruppen der Komponente b), Hydroxylgruppen der Komponente d2) und den gegebenenfalls in der Komponente b)vorliegenden Hydroxylgruppen mindestens bei 1,2:1, besonders bevorzugt bei 4:1 bis 30:1 liegt.

Die Mitverwendung von Hilfs- und Zusatzmitteln d1) bzw. d2) ist mit allgemeinen nicht erforderlich. Die unter d1) beispielhaft genannten Zusatzmittel sind im übrigen gegenüber den unter d2) beispielhaft genannten Verbindungen bevorzugt. Grundsätzlich ist es auch möglich, gleichzeitig beide Arten von Hilfs- und Zusatzmitteln mitzuverwenden.

Weitere, gegebenfalls mitzuverwendende Hilfs- und Zusatzmittel d) sind beispielsweise Füllstoffe wie z.B. Quarzmehl, Kreide oder Aluminiumoxid; Pigmente wie z.B. Titandioxid, Eisenoxid oder organische Pigmente wie Phthalocyanin-Pigmente; Weichmacher wie z.B. Dioctylphthalat, Tributyl- oder Triphenylphosphat; einbaufähige Verträglichkeitsvermittler wie z.B. Methacrylsäure-$\beta$-hydroxypropylester, Maleinsäure- und Fumarsäureester; lösliche Farbstoffe oder Verstärkungsmaterialien wie z.B. Glasfasern oder Glasgewebe. Ebenfalls geeignet sind C-Fasern bzw. C-Fasergewebe und andere organische Polymerfasern wie z.B. Aramidfasern oder LC-Polymerfasern (LC = "liquid cristal").

Die Hilfs- und Zusatzmittel können sowohl den Ausgangsmaterialien a) und b) vor der Durchführung des erfindungsgemäßen Verfahrens einverleibt oder auch erst später mit dem in der lagerstabilen Form vorliegenden Harz zugemischt werden.

Zur Durchführung des erfindungsgemäßen Verfahrens werden die Ausgangsmaterialien a), b) und c) und gegebenenfalls die Hilfs- und Zusatzmittel d) bzw. ein Teil hiervon miteinander vermischt und innerhalb des Temperaturbereichs von 20 bis 150°C, vorzugsweise 60 bis 130°C, zur Reaktion gebracht.

Zur weiteren Verarbeitung werden dem Zwischenprodukt gegebenenfalls nach Auflösen in einem geeigneten Lösungsmittel Katalysatoren und gegebenenfalls (weitere) Hilfs-und Zusatzmittel zugesetzt. Falls die Harze aus Lösung verarbeitet werden sollen, kommen als Lösungsmittel nicht nur inerte Lösungsmittel wie z.B. Aceton, Butylacetat, Methylethylketon, N-Methylpyrrolidon oder deren Gemische sondern auch "reaktive Verdünner" in Betracht, wobei als "reaktive Verdünner" bei Raumtemperatur flüssige Polyisocyanate der unter a) beispielhaft genannten Art bzw. bei Raumtemperatur flüssige Polyepoxide der unter b) beispielhaft genannten denkbar sind, wobei jedoch stets auf einen in derartigen Gemischen vorliegenden NCO-Überschuß gegenüber Epoxid- und Hydroxylgruppen entsprechend einem Äquivalentverhältnis von mindestens 1,2:1 vorzugsweise von mindestens 3:1 geachtet werden muß.

Es können aber auch zusätzlich Monoisocyanate wie z.B. Stearylisocyanat und Monoepoxide wie z.B. Phenoxipropylenoxid mitverwendet werden, vorzugsweise in Mengen bis zu 10 Gew.-% bezogen auf die Mischung aus a) und b).

Die Aushärtung der Gemische erfolgt nach Katalysatorzusatz vorzugsweise bei 20 bis 150°C, wobei es zwecks Erreichens optimaler Eigenschaften oftmals angezeigt ist, die resultierenden Kunststoffe bei Temperaturen zwischen 150 und 250°C, vorzugsweise zwischen 200 und 230°C, nachzuhärten.

Das erfindungsgemäße Verfahren kann auch zur Herstellung von Tränk- und Imprägnierungsmassen für Elektroisolierungen oder für glasfaserverstärkte Laminate herangezogen werden. Das erfindungsgemäße Verfahren eignet sich zur Herstellung von elektrischen Bauteilen nach dem Gießverfahren. Hierzu gehören beispielsweise gedruckte Schaltungen, elektronische Uhren, Taschenrechner, elektronische Kameras, Computer, Mikrocomputer und digital arbeitende Datenspeicher.

Die Wärmebeständigkeit der erfindungsgemäßen Verfahrensprodukte, die niedrigen dielektrischen Verluste, die Feuchtebeständigkeit und die Abriebfestigkeit sowie die Verarbeitbarkeit in Formen sind hervorragend. Außerdem eignet sich das erfindungsgemäße Verfahren zur Herstellung von Isolierstoffen der Isolierstoffklassen H und C (JEC 85/Publication 84) in elektrischen Motoren und Generatoren, zur Herstellung von Konstruktionswerkstoffen für Flugzeuge, Raketen oder anderen hoch beanspruchten Geräten.

Auch die Herstellung von Isolatoren, Transformatoren, Kondensatoren, Schichtstoffen zur Herstellung von Rohren, Behältern oder Sportgeräten ist möglich. Im Falle der Verarbeitung der Gemische in Kombination mit geeigneten Treibmitteln ist auch die Herstellung von Schaumstoffen denkbar.

In den nachfolgenden Beispielen beziehen sich alle Prozentangaben auf Gewichtsprozente.

Beispiele

Beispiel 1

120 Gew.-Teile eines Gemischs aus 60 % 2,4'-Diisocyanatodiphenylmethan und 40 % 4,4'-Diisocyanatodiphenylmethan (NCO-Gehalt = 33,6 %) (MDI) werden mit 30 Gew.-Teilen des Diglycidethers von Bisphenol A (Epoxidzahl = 0,5) und 1,5 ml einer separat hergestellten 1 M Lösung von p-Toluolsulfonsäuremethylester in dem o.g. Diisocyanatgemischs (MDI) gemischt und 30 min unter Stickstoff und Rühren auf 120°C erhitzt. Nach Abkühlen erhält man ein Reaktivharz I mit folgenden Kenndaten:

% NCO = 26,2 (bezogen auf Gesamtgemisch)

Viskosität $\eta_{25°C}$ = 55 mPas

Das Reaktivharz I wird anschließend bei 50°C gelagert und jeweils nach t (Stunden) die NCO-Zahl der Mischung bestimmt:

| Lagerung bei 50°C t (Stunden) | % NCO |
|---|---|
| 24 | 26,2 |
| 72 | 26,2 |
| 144 | 26,1 |
| 216 | 26,2 |
| 240 | 26,2 |

Die NCO-Kontrolle zeigt, daß das erfindungsgemäße Reaktivharz vollkommen lagerstabil ist.

Beispiel 2 (Vergleichsbeispiel)

Man verfährt wie im Beispiel 1 beschrieben nur mit dem Unterschied, daß die 1,5 ml einer separat hergestellten 1 M Lösung von p-Toluolsulfonsäuremethylester dem Ansatz nicht zudosiert werden.

Nach Erhitzen der Mischung aus 120 Gew.-Teilen des im Beispiel 1 genannten Diisocyanats (MDI) mit 30 Gew.-Teilen des Diglycidethers von Bisphenol A (Epoxidzahl = 0,5) (30 min/120°C) unter Rühren und Stickstoff wird abgekühlt. Man erhält das Reaktivharz II mit folgenden Kenndaten:

% NCO = 24,9
Viskosität $\eta_{25°C}$ = 100 mPas

Das Reaktivharz II wird ebenso bei 50°C gelagert und jeweils nach t (Stunden) die NCO-Zahl der Mischung bestimmt.

| Lagerung bei 50°C t (Stunden) | % NCO |
|---|---|
| 24 | 24,5 |
| 72 | 23,0 |
| 144 | 22,0 |
| 216 | 19,9 |
| 240 | 19,1 |

Beispiel 3

Verwendung des Reaktivharzes I zur Herstellung von Formkörpern: 100 Gew.-Teile des Reaktivharzes (I) nach Beispiel 1 werden mit 0,5 ml (3,2 mmol) Dimethylbenzylamin gemischt, unter Rühren im Vakuum entgast und in eine Form gegossen. Die Form wird in einem auf 120°C aufgeheizten Ofen gestellt und 30 min bei dieser Temperatur gelassen. Man erhält auf diese Weise eine steife Platte eines Kunststoffes mit Isocyanurat- und Oxazolidinon-Strukturen.

Dieses Beispiel zeigt, daß lagerstabile Reaktivharze vom Typ (I) nach Zugabe von Katalysatoren ohne nennenswerte Reaktionsverzögerung zu Duromeren härtbar sind.

Beispiel 4 (übliches Prüfverfahren bei Gießharzen des Standes der Technik)

Für das Ganztränkverfahren von elektrischen Maschinen wird eine Gießharzmasse, bestehend aus 100 Gew.-Teilen eines flüssigen, durch Destillation gereinigten Glycdylethers auf Basis Bisphenol A mit folgenden Kennwerten [Epoxidwert 0,54 bis 0,57; Viskosität ca. 750 mPas bei 70°C] und 120 Gew.-Teilen Methylhexahydrophthalsäureanhydrid mit folgenden Kennwerten [Viskosität ca. 40 mPas bei 25°C; Verseifungszahl 655 bis 670] verwendet. Die Prüfung dieser Masse erfolgt auf Viskositätsaufbau in der Weise, daß ca. 250 g des Gemisches einmal bei 100°C über 20 Stunden und einmal bei 70°C über 10 Tage geprüft werden. Dabei erhält man im ersten Fall folgende Kennwerte:

| | |
|---|---|
| Anfangsviskosität des Gemischs bei 70°C | ca. 17,5 mPas |
| Viskositätsanstieg nach Lagerung 20 h/100°C | Δ ≦ 3 mPas |
| d.h. Endwert bei 70°C | max. 20,5 mPas |

Im zweiten Fall wird bestimmt

| | |
|---|---|
| Anfangsviskosität des Gemischs bei 70°C | ca. 17,5 mPas |
| Viskositätsanstieg nach Lagerung 10 Tage bei 70°C | < 22 mPas (70°C) |

Beispiel 5 (Vergleichsbeispiel)

Eine Gießharzmasse entsprechend Beispiel 2 wurde einer Viskositätsaufbauprüfung wie in Beispiel 4 beschrieben unterworfen. Dabei ergaben sich folgende Werte:

1)

| | |
|---|---|
| Anfangsviskosität des Gemischs bei 40°C | ca. 67 mPas |
| Viskositätsanstieg nach Lagerung 20 h/100°C | Δ 82 mPas (40°C) |
| d.h. Endwert bei 70°C | 149 mPas |

2)

| | |
|---|---|
| Anfangsviskosität des Gemischs bei 40°C | ca. 67 mPas |
| Viskosität nach Lagerung 10 Tage bei 70°C | > 600 mPas (40°C) |

Beispiel 6

Eine Gießharzmasse entsprechend Beispiel 1 wurde einer Viskositätsaufbauprüfung wie in Beispiel 4 beschrieben unterworfen. Dabei ergaben sich folgende Werte:

1) Anfangsviskosität des Gemischs
   bei 40°C                                   ca. 17,5 mPas
   Viskositätsanstieg nach Lagerung
   20 h/100°C                                 Δ    0,9 mPas
   d.h. Endwert bei 40°C                           18,4 mPas

2) Anfangsviskosität des Gemischs
   bei 40°C                                   ca. 17,5 mPas
   Viskosität nach Lagerung
   10 Tage/70°C                                    21,3 mPas
                                                   (40°C)

Wie zu erkennen ist, liegt bei dem stabilisierten Gemisch der Viskositätsaufbau sogar noch deutlich niedriger als bei der bisher verwendeten Epoxidharzmischung. In der Praxis bedeutet dies eine längere Lebensdauer des Tränkbades. Ein weiterer Vorteil ist der, daß die Mischung bereits bei 40°C die gleiche niedrige Viskosität aufweist wie das Epoxidharzsystem bei 70°C.

Beispiel 7 (Vergleichsbeispiel)

Je 100 g Gießharzmasse gemäß Vergleichsbeispiel (Beispiel 2) wurden mit je 1 g Katalysator gemischt. Als Katalysatoren wurden verwendet:

a) Dimethylbenzylamin

b) Dimethylbenzylamin-dibutylphosphat.

Bei der Reaktionsharzmischung mit Katalysator a) wurde die Topfzeit nach VDE bei 23°C bestimmt. Es ergab sich ein Wert von 21 Minuten.

Bei der Reaktionsharzmasse mit Katalysator b) wurde die Gelierzeit nach DIN 16 916 bei 160°C geprüft. Der Wert lag bei ca. 300 sec.

Weiter wurden die Gießharzmassen in Aluminiumformen gegossen und durch Wärmezufuhr gehärtet. Die Härtebedingungen waren bei den Fällen 4 h/80°C + 4 H/120°C + 4 h/160°C + 16 h/250°C. Anschließend wurden die so hergestellten Platten der Größe 200 x 300 x 4 mm zu Prüfkörpern aufgeschnitten, an denen folgende mechanische Werte ermittelt wurden:

| | | a | b | Meßmethode: DIN |
|---|---|---|---|---|
| Zugfestigkeit | [N/mm²] | 41 | 51 | 53 455 |
| Reißdehnung | [%] | 2,0 | 2,0 | 53 455 |
| E-Modul aus Zugversuch | [N/mm²] | 3100 | 2990 | 53 457 |
| Biegefestigkeit | [N/mm²] | 112 | 125 | 53 452 |
| Randfaserdehnung | [%] | 4,3 | 5,5 | 53 452 |
| Schlagzähigkeit | [kJ/m²] | 12 | 10,7 | 53 453 |
| Kugeldruckhärte | [N/mm²] | 237 | 232 | 53 456 |
| Martensgrad | [°C] | >250 | >250 | 53 458 |

Beispiel 8 (erfindungsgemäß)

je 100 g Gießharzmasse gemäß Beispiel 1 wurden mit je 1 g eines Katalysators versetzt. Als Katalysator wurden
a) Dimethylbenzylamin
b) Dimethylbenzylamin-dibutylphosphat
verwendet.

Bei dem Gemisch mit Katalysator a) wurde die Topfzeit bei 23°C bestimmt. Es ergab sich ein Wert von 22 Minuten. Bei dem Gemisch mit Katalysator b) wurde die Gelierzeit bei 160°C gemessen. Die Gelierzeit lag bei 600 sec.

10

Weiter wurden in Aluminiumformen Platten der Größe 200 x 300 x 4 mm gegossen. Nach Härtung 4 h/80°C + 4 h/120°C + 4 h/160°C + 16 h/200°C wurden diese Platten zu Prüfkörpern aufgeschnitten, an denen folgende mechanische Werte ermittelt wurden:

| | | a | b | Meßmethode: DIN |
|---|---|---|---|---|
| Zugfestigkeit | $[N/mm^2]$ | 38 | 48 | 53 455 |
| Reißdehnung | $[\%]$ | 2,0 | 2,0 | 53 455 |
| Biegefestigkeit | $[N/mm^2]$ | 111 | 114 | 53 452 |
| Randfaserdehnung | $[\%]$ | 4,2 | 5,5 | 53 452 |
| E-Modul aus Zugversuch | $[N/mm^2]$ | 3100 | 3050 | 53 457 |
| Schlagzähigkeit | $[kJ/m^2]$ | 14 | 12 | 53 453 |
| Kugeldruckhärte | $[N/mm^2]$ | 240 | 232 | 53 456 |
| Wärmeformbeständigkeit nach Martens | $[°C]$ | >250 | >250 | 53 458 |

Erläuterung

Alle in den Beispielen 7 und 8 gemessenen Werte liegen innerhalb der Schwankungsbreite, wie sie bei Duroplasten üblich sind. Ein Einfluß des Alkylierungsmittels auf die mechanischen Festigkeitswerte muß verneint werden.

Beispiel 9

1000 Gew.-Teile eines Carbodiimidgruppen aufweisenden Polyisocyanats gemäß US 31 52 162 (NCO-Gehalt = 29 %) werden mit 680 Gew.-Teilen eines Diglycidethers von Bisphenol A (Epoxidzahl = 0,5) und 5,1 ml einer separat hergestellten 1 m Lösung von p-Toluolsulfonsäuremethylester in dem o.g. Diisocyanatgemisch gemischt und 30 min unter Stickstoff und Rühren auf 120°C erhitzt. Nach Abkühlen erhält man ein Reaktivharz mit folgenden Kenndaten:

% NCO =             15,6
Viskosität $\eta_{25°C}$ =      470 mPas

Das Reaktivharz wird anschließend bei 60°C 144 Stunden gelagert und danach die NCO-Zahl der Mischung bestimmt; sie beträgt 15,6 % NCO.

Das Reaktivharz ist demnach vollkommen lagerstabil.

Beispiel 10

80 Gew.-Teile eines Gemischs aus Polyphenyl-polymethylen-polyisocyanaten, wie sie durch Anilin-Formaldehydkondensation und anschließende Phosgenierung erhalten werden (NCO-Gehalt = 29,9 %) (Roh-MDI) werden mit 20 Gew.-Teilen eines Diglycidethers von Bisphenol A (Epoxidzahl = 0,5) und 0.186 g (1 mmol) p-Toluolsulfonsäuremethylester gemischt und 30 min unter Stickstoff und Rühren auf 120°C erhitzt. Nach Abkühlen erhält man ein Reaktivharz IV mit folgenden Kenndaten:

% NCO =             23,6
Viskosität $\eta_{25°C}$ =      1120 mPas

**Patentansprüche**

1. Lagerstabile Reaktionsharzmischung enthaltend wenigstens ein Polyisocyanat a) und wenigstens eine Epoxidgruppen aufweisende organische Verbindung b), dadurch gekennzeichnet, daß die Mischung erhältlich ist aus
   a) mindestens einem organischen Polyisocyanat
   b) mindestens einer mindestens zwei Epoxidgruppen aufweisenden organischen Verbindung
   c) wenigstens einem die Reaktion von a) und b) inhibierenden Alkylierungsmittel aus der Gruppe der Ester einer organischen Sulfonsäure, Methyljodid oder Dimethylsulfat,
   d) gegebenenfalls weiteren Hilfs- und Zusatzstoffen
   Wobei in Gemisch ein NCO-Überschuß gegenüber Epoxid- und Hydroxylgruppen entsprechend einem Äquivalentverhältniss von mindestens 1,2 : 1 vorliegen muß.

2. Mischung nach Anspruch 1, dadurch gekennzeichnet, daß das Alkylierungsmittel c) Alkylgruppen mit 1 bis 4 C-Atomen überträgt und in einer Menge von 0,001 bis 1 Gew.-% bezogen auf die Summe aus a) und b) eingesetzt wird.

3. Mischung nach Anspruch 1, dadurch gekennzeichnet, daß das Polyisocyanat a) folgender Formel entspricht

   Q (NCO)$_n$

   in der
   n = 2 bis 4, und
   Q einen aliphatischen Kohlenwasserstoffrest mit 2 bis 18, einen cycloaliphatischen Kohlenwasserstoffrest mit 4 bis 15, einen aromatischen Kohlenwasserstoffrest mit 6 bis 15, oder einen araliphatischen Kohlenwasserstoffrest mit 8 bis 15, bedeuten,

4. Mischung nach Anspruch 1, dadurch gekennzeichnet, daß als Polyisocyanat a) ein Isomeren und/oder Homologengemisch von Polyisocyanaten der Diphenylmethanreihe enthalten ist.

5. Mischung nach Anspruch 1, dadurch gekennzeichnet, daß die Komponente b) pro Molekül 2 bis 4 Epoxidgruppen aufweist und ein Epoxidäquivalentgewicht von 90 bis 500 hat.

6. Mischung nach Anspruch 1, dadurch gekennzeichnet, daß die Komponente c) p-Toluolsulfonsäuremethylester ist.

7. Mischung nach Anspruch 1, dadurch gekennzeichnet, daß die Komponente d) ein polymerisierbares olefinisch ungesättigtes Monomer d1) oder eine wenigstens zwei alkoholische Hydroxylgruppen aufweisende organische Verbindung d2) des Molekulargewichts 62 bis 2000 ist.

8. Mischung nach Anspruch 1, dadurch gekennzeichnet, daß Komponente b) in einer solchen Menge eingesetzt wird, die einem Äquivalentverhältnis von Isocyanatgruppen der Komponente a) zu Epoxidgruppen der Komponente b) von 1,2:1 bis 500:1 entspricht und Komponente c) in einer Menge von 0,001 bis 1 Gew.-% bezogen auf die Summe aus Komponenten a) und b) eingesetzt wird.

9. Verfahren zur Herstellung einer Mischung gemäß Anspruch 1, dadurch gekennzeichnet, daß die Komponenten a) bis c) und gegebenenfalls d) gleichzeitig, zusammengegeben werden und zusammen oder wenigstens die Komponenten b) und c) zusammen einer Temperaturbehandlung bei 20 bis 150°C unterzogen werden.

10. Verwendung der lagerstabilen Reaktivmischung gemäß Anspruch 1, gegebenenfalls nach Zusatz von an sich bekannten Katalysatoren zur Herstellung von Formkörpern, Elektroisolierstoffen, Beschichtungen, Verklebungen und Schaumstoffen.

## Claims

1. A storage-stable reaction resin mixture containing at least one polyisocyanate a) and at least one organic compound with epoxide groups b), characterised in that the mixture is obtainable from
   a) at least one organic polyisocyanate
   b) at least one organic compound containing at least two epoxide groups
   c) at least one alkylating agent inhibiting the reaction of a) and b) from the group consisting of an ester of an organic sulphonic acid, methyl iodide or dimethyl sulphate
   d) optionally, other auxiliary substances and additives,
   wherein there must be an NCO excess, as compared with epoxide and hydroxyl groups, corresponding to a ratio by equivalents of at least 1.2 : 1 in the mixture.

2. A mixture according to Claim 1, characterised in that the alkylating agent c) has 1 to 4 carbon atoms and is used in an amount of 0.001 to 1% by weight relative to the sum of a) and b).

3. A mixture according to Claim 1, characterised in that the polyisocyanate a) corresponds to the following formula

$Q(NCO)_n$

wherein
n = 2 to 4 and,
Q represents an aliphatic hydrocarbon radical with 2 to 18, a cycloaliphatic hydrocarbon radical with 4 to 15, an aromatic hydrocarbon radical with 6 to 15 or an araliphatic hydrocarbon with 8 to 15.

4. A mixture according to Claim 1, characterised in that an isomeric and/or homologous mixture of polyisocyanates of the diphenylmethane series is contained as polyisocyanate a).

5. A mixture according to Claim 1, characterised in that the component b) contains 2 to 4 epoxide groups per molecule and has an epoxide equivalent weight of 90 to 500.

6. A mixture according to Claim 1, characterised in that the component c) is methyl p-toluenesulphonate.

7. A mixture according to Claim 1, characterised in that the component d) is a polymerisable olefinic unsaturated monomer d1) or an organic compound d2) of molecular weight 62 to 2000 containing at least two alcoholic hydroxyl groups.

EP 0 331 996 B1

8. A mixture according to Claim 1, characterised in that component b) is used in an amount such that it corresponds to a ratio by equivalents of isocyanate groups in component a) to epoxide groups in component b) of 1.2:1 to 500:1 and component c) is used in an amount of 0.001 to 1% by weight relative to the sum of components a) and b).

9. A process for preparing a mixture in accordance with Claim 1, characterised in that the components a) to c) and optionally d) are combined simultaneously and together or at least components b) and c) together are subjected to thermal treatment at 20 to 150°C.

10. Use of the storage-stable reactive mixture in accordance with Claim 1, optionally after the addition of per se known catalysts, to prepare moulded parts, electrical insulating materials, coatings, adhesives and foams.

**Revendications**

1. Mélange de résines réactives stable à l'entreposage, contenant au moins un polyisocyanate a) et au moins un composé organique b) portant des groupes époxyde, caractérisé en ce que le mélange est obtenu à partir
   a) d'au moins un polyisocyanate organique,
   b) d'au moins un composé organique portant au moins deux groupes époxyde,
   c) d'au moins un agent d'alkylation inhibant la réaction de a) et b), du groupe des esters d'un acide sulfonique organique, de l'iodure de méthyle ou du sulfate de diméthyle,
   d) le cas échéant, d'autres substances auxiliaires et additifs,
   le mélange devant contenir un excès de groupes NCO par rapport aux groupes époxyde et hydroxyle correspondant à un rapport d'équivalents d'au moins 1:1.

2. Mélange suivant la revendication 1, caractérisé en ce que l'agent d'alkylation en c) transfère des groupes alkyle ayant 1 à 4 atomes de carbone et est utilisé en une quantité de 0,001 à 1 % en poids par rapport à la somme de a) et de b).

3. Mélange suivant la revendication 1, caractérisé en ce que le polyisocyanate a) répond à la formule suivante

   $Q(NCO)_n$

   dans laquelle
   n    a une valeur de 2 à 4, et
   Q    est un reste d'hydrocarbure aliphatique ayant 2 à 18 atomes de carbone, un reste d'hydrocarbure cycloaliphatique ayant 4 à 15 atomes de carbone, un reste d'hydrocarbure aromatique ayant 6 à 15 atomes de carbone ou un reste d'hydrocarbure araliphatique ayant 8 à 15 atomes de carbone.

4. Mélange suivant la revendication 1, caractérisé en ce qu'il contient comme polyisocyanate a) un isomère et/ou un mélange d'homologues de polyisocyanates de la série du diphénylméthane.

5. Mélange suivant la revendication 1, caractérisé en ce que le composé b) présente, par molécule, 2 à 4 groupes époxyde et a un poids équivalent d'époxyde de 90 à 500.

6. Mélange suivant la revendication 1, caractérisé en ce que le composé c) est l'ester méthylique de l'acide p-toluènesulfonique.

7. Mélange suivant la revendication 1, caractérisé en ce que le composé d) est un monomère polymérisable a non-saturation oléfinique d1) ou un composé organique d2) porteur d'au moins deux groupes hydroxyle alcooliques d'un poids moléculaire de 62 à 2000.

8. Mélange suivant la revendication 1, caractérisé en ce que le composant b) est utilisé en une quantité qui correspond à un rapport d'équivalents des groupes isocyanate du composant a) aux groupes époxyde du composant b) de 1,2:2 à 500:1, et le composant c) est utilisé en une quantité de 0,001 à 1

14

% en poids par rapport à la somme des composants a) et b).

9. Procédé de production d'un mélange suivant la revendication 1, caractérisé en ce que les composants a) à c) et le cas échéant d) sont réunis simultanément et sont exposés ensemble, ou tout au moins les composants b) et c) ensemble, à un traitement à une température de 20 à 150°C.

10. Utilisation du mélange réactif stable à l'entreposage suivant la revendication 1, éventuellement après addition de catalyseurs connus, pour la production de corps façonnés, d'isolants électriques, de revêtements, d'assemblages par collage et de mousses.